## Europäisches Patentamt

## European Patent Office

## Office européen des brevets

(19)

(11) Veröffentlichungsnummer: **0 123 897**
A2

(12) **EUROPÄISCHE PATENTANMELDUNG**

(21) Anmeldenummer: **84103347.5**

(22) Anmeldetag: **27.03.84**

(51) Int. Cl.³: **B 60 N 1/00**

(30) Priorität: **04.04.83 US 481685**

(43) Veröffentlichungstag der Anmeldung: **07.11.84**
Patentblatt 84/45

(84) Benannte Vertragsstaaten: **DE FR GB IT SE**

(71) Anmelder: **DEERE & COMPANY, 1 John Deere Road, Moline Illinois 61265 (US)**

(72) Erfinder: **Stecklein, Gary Lee, 6414 Handsome Lake, San Antonio Texas 78238 (US)**

(74) Vertreter: **Feldmann, Bernhard et al, DEERE & COMPANY European Office, Patent Department Steubenstrasse 36-42 Postfach 503, D-6800 Mannheim 1 (DE)**

(54) **Sitz mit Sitzkissen für den Bedienungsstand einer selbstfahrenden Arbeitsmaschine.**

(57) Ein Sitz (13) für den Bedienungsstand einer selbstfahrenden Arbeitsmaschine (10), die an ihrer Rückseite mit einem Heckbagger (12) ausgerüstet ist, kann aus seiner in Fahrtrichtung zeigenden Stellung um 180° in eine zum Heckbagger zeigende Stellung gedreht werden. Der Sitz (13) ist mit einem hochklappbaren Sitzkissen (39) versehen und so angeordnet, daß er bei dem Verschwenken eine Position einnehmen kann, die es der Bedienungsperson erlaubt, sich zwischen dem Sitz und einem seitlichen Fahrzeugaufbau von einem Ende zum anderen auf dem Bedienungsstand zu bewegen.

Sitz mit Sitzkissen für den Bedienungsstand einer selbstfahrenden Arbeitsmaschine

Die Erfindung bezieht sich auf einen Sitz mit Sitzkissen
für den Bedienungsstand einer selbstfahrenden Arbeitsmaschine, der aus einer in Fahrtrichtung zeigenden Stellung
um 180° in eine nach rückwärts zeigende Stellung verstellbar, in seinen beiden Stellungen an seinen beiden Seiten
von Fahrzeugaufbauten umgeben und auf einem Podest mittig
oder etwa mittig zwischen den Fahrzeugaufbauten angeordnet
ist.

Als selbstfahrende Arbeitsmaschinen geltende Baumaschinen
sind vielfach an ihrer Rückseite mit einem Arbeitsgerät,
wie einem Heckbagger ausgerüstet. Um diesen bedienen zu
können, ist eine Sitzgelegenheit für die Bedienungsperson
vorzusehen. Hierzu sind bereits viele Vorschläge gemacht
worden, beispielsweise derart, daß außer dem Fahrersitz ein
zusätzlicher Bedienungssitz angeordnet wurde. Moderne Konzepte sehen vor, daß der Fahrersitz in eine Position gebracht
werden kann, in der auch der Heckbagger betätigbar ist. Das
bedeutet, daß der Fahrersitz, der normalerweise nach vorne
gerichtet ist, in eine Stellung zu bringen ist, in der er
nach rückwärts mit Blick auf den Heckbagger gerichtet ist.
Sind die Platzverhältnisse am Bedienungsstand ausreichend
groß, bedeutet das Umdrehen des Fahrersitzes keine konstruktiven Schwierigkeiten. Diese treten erst auf, wenn die
Platzverhältnisse sehr eingeengt sind, da dann der Sitz,
wenn er beispielsweise gedreht wird, gegen seitliche Fahrzeugaufbauten anschlägt. Auch wenn dies vermieden werden
sollte, unter Umständen dadurch, daß das Sitzkissen entsprechend kurz ist, wodurch ein ermüdungsfreies Arbeiten nicht
mehr gewährleistet ist, bleibt beim Drehen des Sitzes für die
Bedienungsperson kein Platz vorhanden, damit sie sich von dem frontseitigen Bereich zum rückwärtigen Bereich des Bedienungsstandes oder umgekehrt bewegen kann. Ihr bleibt es dann nur übrig, vom Fahrzeug abzusteigen oder über den Sitz oder andere Fahrzeugaufbauten zu klettern. Diese Möglichkeiten sind aber unerwünscht. Hinzu kommt noch, daß in den Sitzpositionen die verschiedensten Bedienungselemente so angeordnet sein müssen, daß sie von der Bedienungsperson leicht erreicht werden können. Sind die Bedienungsstände noch mit Kabinen oder nur Überrollvorrichtungen ausgerüstet, so werden die Platzverhältnisse noch ungünstiger.

Die mit der Erfindung zu lösende Aufgabe wird daher darin gesehen, den Sitz bei derartigen selbstfahrenden Fahrzeugen so auszubilden, daß beim Verstellen des Sitzes ein ausreichend großer Freiraum für die Bedienungsperson verbleibt, damit sie sich gefahrlos von einer Seite des Bedienungsstands zu dessen anderer Seite bewegen kann.

Diese Aufgabe ist gemäß der Erfindung dadurch gelöst worden, daß das Podest außermittig angeordnet und das Sitzkissen in eine hochgeklappte Stellung verstellbar ist.

Auf diese Weise kann das Sitzkissen ausreichend groß und komfortabel gestaltet und zum Verstellen des Sitzes hochgeklappt werden, so daß es dabei nicht an seitliche Fahrzeugaufbauten anschlägt, wobei durch die außermittige Anordnung des Podests beim Verdrehen des Sitzes um 90° ausreichend Platz für die Bedienungsperson verbleibt, damit sie sich zwischen Sitz mit hochgeklapptem Sitzkissen und einer Seite des Bedienungsstandes leicht von dessen frontseitigen Ende zu dessen rückwärtigen Ende oder umgekehrt bewegen kann.

Im einzelnen wird nach der Erfindung für Sitze, deren Podest, das zur Längsverstellung des Sitzes ausgebildet sein kann, mit einer Drehvorrichtung ausgerüstet ist, vorgeschlagen, daß die Drehachse der Drehvorrichtung außermittig am Podest und mittig oder etwa mittig zwischen den Fahrzeugaufbauten vorgesehen ist, und in den beiden Stellungen Abstand zu den Anlenkstellen des Sitzkissens aufweist. Damit kann der Sitz so komfortabel ausgebildet werden, daß er nahezu die volle Breite zwischen den seitlichen Fahrzeugaufbauten einnimmt und sich auch noch in der Längsmittelebene zwischen den seitlichen Fahrzeugaufbauten befindet.

Im einzelnen kann bei Sitzen mit Zwischenrahmen letzterer erfindungsgemäß einen mit der Drehvorrichtung verbundenen Horizontalteil mit Seitenteilen aufweisen, die mit Bezug auf die Drehachse der Drehvorrichtung nach rückwärts sich fort erstrecken, wobei das Sitzkissen auf einem U-förmigen Sitzkissenrahmen mit einem horizontalen Basisteil angeordnet ist, das unterhalb des Sitzkissens und oberhalb des Horizontalteils angeordnet ist und in Vertikalseiten übergeht, die zwischen den Seitenteilen angeordnet und mit diesen vertikal schwenkbar verbunden sind und wobei die Rückenlehne mit den Seitenteilen verbunden ist, die über Gelenke mit den Vertikalseiten an Stellen angelenkt sind, die der Rückenlehne zugelegen und der Drehachse der Drehvorrichtung abgelegen sind.

Damit das Sitzkissen in seinen beiden Endstellungen verbleiben kann, soll nach der Erfindung das Sitzkissen entgegen der Wirkung mindestens einer Feder aus seiner Sitzstellung und seiner hochgeklappten Stellung verstellbar sein. Hierzu ist die Feder einenends an den Seitenteilen und anderenends an den Vertikalseiten abgestützt und so angeordnet, daß beim Verschwenken des Sitzkissens die vertikalseitige Anschlußstelle der Feder von einer Seite des Vertikal- und Seitenteil miteinander verbindenden Gelenks auf dessen andere Seite wandert, wobei mindestens eine Vertikalseite mit einer drehbar gelagerten, eine Stange aufnehmenden Stummelwelle versehen ist, die Stange in einem drehbar in einem Seitenteil gelagerten Bolzen verschiebbar und die Feder auf der Stange zwischen der Stummelwelle und dem Bolzen vorgesehen ist.

Um den Sitz in einfacher Weise in seinen beiden Endstellungen arretieren zu können, ist der Sitzrahmen mit einer an einer Stange angeordneten Nase versehen, die Stange am Sitzkissenrahmen drehbar gelagert und die Nase ist in zwei Aussparungen einrastbar, die in einer mit dem Podest verbundenen Platte vorgesehen sind.

In der Zeichnung ist ein nachfolgend näher erläutertes Ausführungsbeispiel der Erfindung dargestellt. Es zeigt:

Fig. 1 eine Baumaschine in perspektivischer Ansicht;

Fig. 2 einen Sitz für die Bedienungsperson der Baumaschine in Seitenansicht;

Fig. 3 einen Schnitt nach der Linie 3 - 3 in Fig. 2;

Fig. 4 einen Schnitt nach der Linie 4 - 4 in Fig. 2;

Fig. 5 einen Schnitt nach der Linie 5 - 5 in Fig. 2;

Fig. 6 einen Schnitt nach der Linie 6 - 6 in Fig. 2;

Fig. 7 die Unterseite des Sitzes in perspektivischer Ansicht;

Fig. 8 den Sitz in Gebrauchsstellung und in schematischer Ansicht;

Fig. 9 den Sitz in seitlich gedrehter Stellung mit
hochgeklappten Sitzkissen.

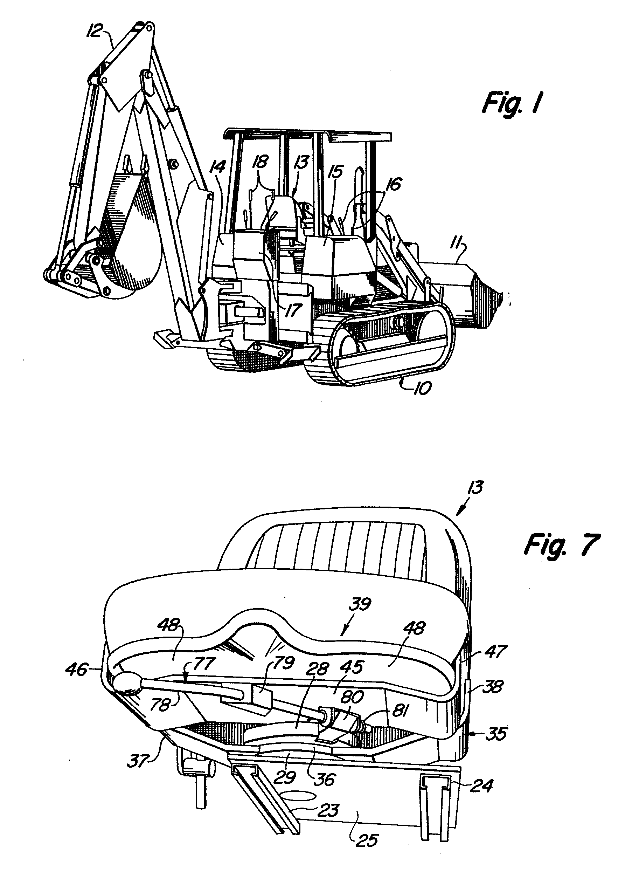

In Fig. 1 der Zeichnung ist eine Baumaschine 10 mit einem Kettenfahrgestell dargestellt. Derartige Baumaschinen sind in der Regel mit an der Vorder- und an der Rückseite angeordneten hydraulisch betätigbaren Arbeitsgeräten ausgerüstet, und zwar im vorliegenden Fall mit einer frontseitigen Ladeschaufel 11 und einem rückwärtigen Heckbagger 12. Die Bedienung der Baumaschine und ihrer Arbeitsgeräte erfolgt von einem Bedienungsstand mit einem Sitz 13 aus. Moderne Bedienungsstände stellen an den Konstrukteur erhebliche Anforderungen, da auf einen ermüdungsfreien Arbeitsplatz abzustellen ist, so daß unter anderem die Bedienungselemente in Reichweite der Bedienungsperson sich befinden müssen, der Fahrersitz entsprechend auszubilden ist usw. Bei den Baumaschinen der vorgenannten Art kommt noch hinzu, daß der Sitz um 180° in eine rückwärtige Stellung gedreht werden kann, um auch den Heckbagger zu bedienen. Diese Anforderungen sind im Prinzip alle leicht zu erfüllen, wenn die räumlichen Verhältnisse es zulassen. Dies trifft aber selten zu, da der Bedienungsstand von allen Seiten eingeengt ist. So ist, wie aus Fig. 1 zu ersehen ist, der Bedienungsstand der vorgestellten Baumaschine an seinen rechten und linken Seiten durch zwei Behälter oder Konsolen 14, 15 begrenzt, die Brennstoff, Hydrauliköl oder auch Stellmechanismen für die Bedienung der Baumaschine oder der Arbeitsgeräte enthalten können. Im vorliegenden Fall sind an den Konsolen 14, 15 Bedienungselemente 16 vorgesehen. Weitere Bedienungselemente befinden sich mit Blick in Fahrtrichtung vor dem Sitz 13 und eine Steuerkonsole 17 mit Bedienungshebeln 18 ist hinter dem Sitz 13 zur Betätigung des Heckbaggers 12 angeordnet. Somit ist leicht erkennbar, daß der vorliegende Bedienungsstand von allen Seiten begrenzt und damit sehr eng ist. Dies beeinträchtigt die Bewegungsfreiheit der Bedienungsperson und gibt dem Sitz 13 zur Verstellung zwischen seiner frontseitigen und rückwärtigen Position nur wenig Raum.

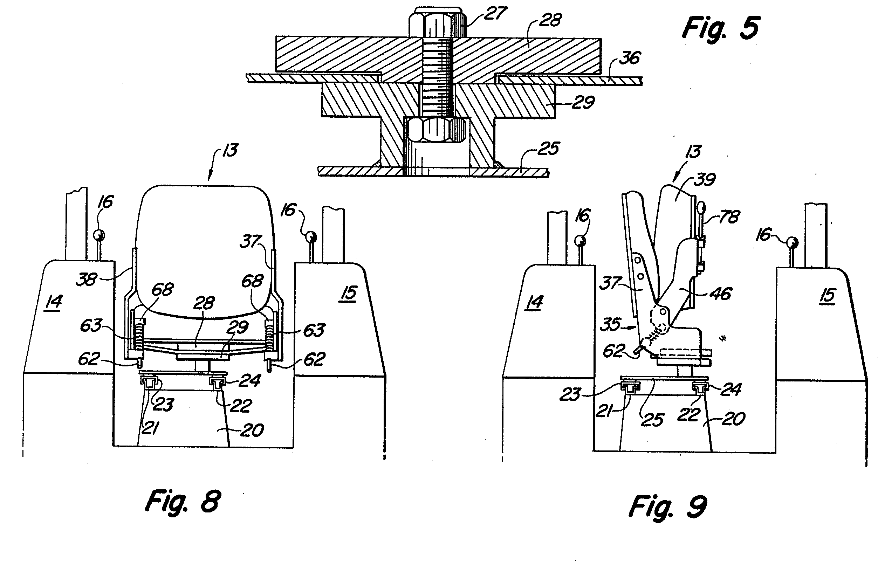

Der Sitz 13 ist auf einem Podest 20 angeordnet, das sich auf der Plattform des Bedienungsstands befindet. Dieses Podest ist so angeordnet, daß es mit Bezug auf die Längsmittelebene zwischen den beiden Konsolen 14, 15 seitlich versetzt ist, so daß es sich näher an einer Konsole und weiter weg von der anderen Konsole befindet. Aus Fig. 8 ist zu ersehen, daß das Podest 20 näher an die linke Konsole 14 herangerückt ist, so daß sich zwischen der rechten Konsole 15 und dem Podest ein größerer Abstand ergibt, der als Durchgangsweg für die Bedienungsperson genutzt werden kann. Auf dem Podest 20 sind zur Längsverschiebung des Sitzes 13 zwei Schienen 21 und 22 mit gegenseitigem Abstand und sich in Fahrzeuglängsrichtung erstreckend angeordnet, auf denen je ein Gleitelement 23 und 24 in Form von sich ebenfalls in Fahrzeuglängsrichtung erstreckenden Profileisen geführt ist. Die Gleitelemente 23 und 24 sind mit der Unterseite einer sich im wesentlichen horizontal erstreckenden Platte 25 des Sitzes 13 fest verbunden. Über eine nicht dargestellte Arretiervorrichtung an der Schiene 21 und dem Gleitelement 23 kann der Sitz 13 in den verschiedensten Stellungen festgestellt werden.

Die Platte 25 gehört zu einem Zwischenrahmen des Sitzes 13 und ist, wie auch aus Fig. 5 hervorgeht, mit einer auf Stelzen sich abstützenden Platte 29 verschweißt, die wiederum über eine Schraubverbindung 27 mit einer weiteren Platte 28 verbunden ist. Die Platten 28 und 29 sind derart ausgebildet bzw. angeordnet, daß sich zwischen ihnen ein vertikaler umlaufender Spalt ergibt, in dem der Sitz, wie noch auszuführen ist, um die vertikale Schraubverbindung drehen kann.

Der Sitz 13 ist ferner mit einem Rückrahmen versehen, der im wesentlichen aus einem einzigen Plattenteil 35 besteht und den Sitz, wie aus Fig. 7 zu ersehen ist, untergreift. Der Plattenteil 35 hat einen Horizontalteil 36, der in dem zwischen den Platten 28 und 29 gebildeten Spalt geführt ist und in zwei Seitenteile 37 und 38 übergeht, die noch nach oben und rückwärts gezogen sind. Der Sitz 13 ist natürlich mit einem bequemen Sitzkissen 39 ausgerüstet, das eine metallene Unterseite, zweckmäßig in Form einer Schale 48, aufweist, an der ein umlaufender Rand vorgesehen ist. An diesen Rand ist ein Sitzkissenrahmen angeschraubt. Dieser ist wiederum im wesentlichen U-förmig ausgebildet und hat demnach einen horizontal verlaufenden Basisteil 45 mit zwei Vertikalseiten 46 und 47, die über Schrauben 49 mit dem Rand des Sitzkissens 39 verbunden sind, so daß der Sitzkissenrahmen das Sitzkissen untergreift.

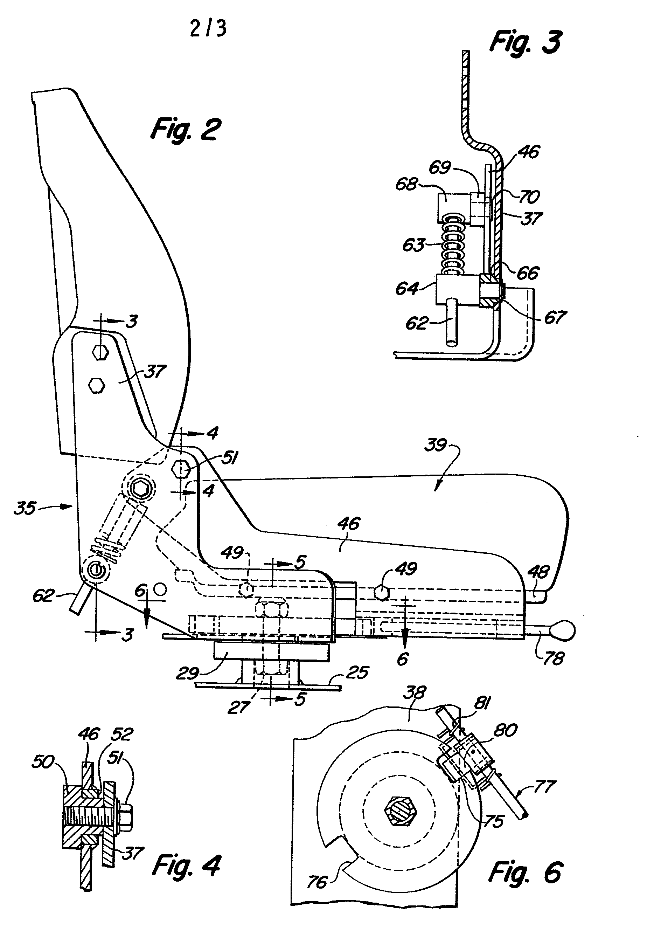

Auch die Vertikalseiten 46 und 47 sind nach rückwärts gezogen und so angeordnet, daß sie sich bis zwischen die Seitenteile 37 und 38 des Rückrahmens erstrecken. Mit diesen sind die Vertikalseiten 46 und 47 über die in Fig. 4 gezeichnete Anordnung vertikal schwenkbar verbunden. Im einzelnen sind an beiden Seiten T-förmige Buchsen 50 über Schrauben 51 mit den Seitenteilen 37 und 38 fest verbunden, wobei zwischen dem Kopf jeder Buchse 50 und dem zugehörigen Seitenteilen 37 bzw. 38 auf dem Mantel der Buchsen Lager 52 drehbar sind, die mit den Vertikalseiten 46 und 47 verschweißt sind. Damit ist das Sitzkissen 39 mit dem Sitzkissenrahmen an dem Rückrahmen um horizontale Achsen vertikal verschwenkbar und kann aus seiner horizontalen Sitzposition in eine vertikale Stellung, wie sie in Fig. 9 zu erkennen ist geklappt werden und umgekehrt. In der hochgeklappten Position befindet sich das Sitzkissen 39 unmittelbar vor einer gepolsterten Rückenlehne 43, die ebenfalls mit den Seitenteilen 37 und 38 verbunden ist.

Die Schraubverbindung 27, um deren Längsachse der Sitz 13 drehen kann, befindet sich etwa mittig zwischen den Konsolen 14 und 15 und ist damit seitlich am Podest 20 vorgesehen. Die Schwenkverbindung wiederum, über die das Sitzkissen bzw. der Sitzkissenrahmen mit dem Rückrahmen verbunden ist, weist einen derartigen Abstand zur Längsachse der Schraubverbindung 27 auf, daß das Sitzkissen in der hochgeklappten Stellung zu der Längsachse der Schraubverbindung 27 in Richtung auf die Rückenlehne 43 versetzt ist.

Damit das Sitzkissen 39 sowohl in der Sitzstellung als auch in der hochgeklappten Stellung gehalten werden kann, ist zwischen den Seitenteilen 37, 38 des Rückrahmens und den Vertikalseiten 46, 47 des Sitzkissenrahmens je eine Federanordnung vorgesehen. Diese ist im einzelnen in Fig. 3 dargestellt und besteht jeweils aus einer Stange 62, die eine Druckfeder 63 aufnimmt, einenends in einer Stummelwelle 68 fest angeordnet und durch einen drehbar gelagerten Bolzen 64 geführt ist. Die Druckfeder 63 befindet sich zwischen Stummelwelle und Bolzen und drückt, wie später noch erläutert wird, auf die mit dem Sitzkissenrahmen verstellbare Stummelwelle, wobei der Bolzen 64 ortsfest in dem Rückrahmen angeordnet ist. Hierzu ist der Bolzen 64 mit einem abgedrehten Ende 65 versehen, das in einem Hülsenlager 66 drehbar ist. Die Hülsenlager 66 sind mit den Seitenteilen 36, 37 verschweißt und erstrecken sich von diesen nach innen. Über je einen Haltering 67 sind die Bolzen 64 in den Hülsenlagern 66 gesichert. Auch die Stummelwelle 68 ist mit einem abgedrehten Ende versehen, das sich durch ein Hülsenlager 69 erstreckt und durch einen Haltering 70 gesichert ist. Die Hülsenlager 69 sind mit den Vertikalseiten 46, 47 fest verbunden und erstrecken sich von diesen nach innen.

Aus Fig. 2 ist nun zu entnehmen, daß die in Richtung der Stange 62 zeigende Federkraftlinie sich von einer Stelle neben der durch die Schraube 51 gekennzeichneten Schwenkverbindung auf die andere Seite der Schwenkverbindung bewegen wird, wenn das Sitzkissen 39 zwischen seiner Sitzstellung und seiner hochgeklappten Stellung verstellt wird. Die Federanordnung ist so getroffen, daß die Druckfedern in den Endstellungen des Sitzkissens 39 immer gespannt sind, wodurch das Sitzkissen mit Sitzkissenrahmen in diesen Stellungen gehalten wird und nur durch Anwendung von Muskelkraft aus den Endstellungen verschwenkt werden kann.

In die obere Platte 28 sind zwei sich diametral gegenüberliegende Aussparungen 75, 76 eingearbeitet und an der Unterseite des Basisteils 45 des Sitzkissenrahmens ist eine Hebelanordnung 77 vorgesehen. Die Hebelanordnung und die Aussparungen dienen dazu, den Sitz 13 in seiner normalen nach vorne zeigenden Stellung und in seiner zum Heckbagger zeigenden Stellung festzustellen. Die Hebelanordnung 77 besteht im einzelnen, wie aus den Fig. 6 und 7 hervorgeht, aus einer gekröpften Stange 78, die horizontal drehbar in einem Lager 79 angeordnet ist. Das Lager 79 ist dabei mit der Unterseite des Basisteils 45 verschweißt. An ihrem inneren Ende ist die Stange 78 mit einer Nase 80 versehen, die in eine der beiden Aussparungen 75 oder 76 unter Wirkung einer Torsionsfeder 81 einrasten kann. Die beiden Aussparungen 75 und 76 sind natürlich in der Platte 28 so angeordnet, daß die Nase 80 nur einrasten kann, wenn sich der Sitz in seiner nach vorn oder nach rückwärts zeigenden Stellung befindet. Das Einrasten erfolgt selbsttätig unter der Wirkung der Torsionsfeder. Zum Ausrasten der Nase aus der Aussparung braucht lediglich die Stange 78 an ihrem der Sitzvorderkante zugelegenen Ende nach unten gedrückt zu werden.

Aus den Fig. 8 und 9 ist nun zu entnehmen, daß die Breite zwischen den Konsolen 14 und 15 sehr klein ist und daß der Sitz nicht gedreht werden könnte, wenn das Sitzkissen 39 nicht in die hochgeklappte Stellung bringbar wäre. Andererseits sind die Bedienungshebel 18 an den entsprechenden Konsolen 14 und 15 so angebracht, daß sie von einer sich auf dem Sitz befindlichen Bedienungsperson bequem erreicht werden können. Damit sind nicht nur die konstruktiven Erfordernisse, auf Grund derer der Bedienungsstand sehr eng ist, zu berücksichtigen, sondern auch Kompforterfordernisse, da es wünschenswert ist, daß die Bedienungshebel mit Bezug auf die Arme der Bedienungsperson die richtige Höhe und eine richtige Lage einnehmen.

In Fig. 8 ist der Sitz in seiner Arbeitsstellung dargestellt. Sollte nun der Sitz gedreht werden, so würde das Sitzkissen, sofern es sich in seiner Sitzstellung befindet, gegen eine der Konsolen anstoßen und damit ein Drehen des Sitzes verhindern. Wäre andererseits der Abstand zwischen den Konsolen derart groß, daß der Sitz mit nicht hochgeklappten Sitzkissen noch gedreht werden könnte, so wäre immer noch nicht genügend Platz vorhanden, der es der Bedienungsperson gestatten würde, sich auf dem Bedienungsstand derart zu bewegen, daß der Sitz zwischen seinen beiden Arbeitsstellungen gedreht werden könnte. Dadurch aber, daß das Podest 20 mit Bezug auf die Längsmittelebene nach links verschoben wurde, die Drehachse des Sitzes sich aber immer noch in der Mitte oder etwa in der Mitte zwischen den beiden Konsolen 14 und 15 befindet und dadurch, daß das Sitzkissen mit Sitzkissenrahmen hochgeklappt werden kann und der Sitz sich in seiner um 90° gedrehten Stellung näher an der Konsole 14 befindet, entsteht für die Bedienungsperson zwischen der rechten Konsole 15 und dem Sitz in der hochgeklappten und um 90° gedrehten Stellung ein genügend großer Freiraum, der es der Bedienungsperson leicht gestattet, den Sitz zu drehen und sich dabei von vorne am Bedienungsstand nach hinten und umgekehrt zu bewegen. Ansonsten müßte die Bedienungsperson vom Bedienungsstand absteigen und sich nach hinten begeben, um dort wieder am rückwärtigen Ende auf den Bedienungstand zu steigen, um den Heckbagger betätigen zu können. Dabei müßte aus sicherheitstechnischen Erwägungen heraus der Fahrzeugmotor abgestellt werden. Andererseits könnte die Bedienungsperson aber den Fahrzeugmotor laufen lassen und einfach über den Sitz klettern. Beide Möglichkeiten sind aber höchst unerwünscht und daher abzulehnen.

Patentansprüche

1. Sitz (13) mit Sitzkissen (39) für den Bedienungsstand einer selbstfahrenden Arbeitsmaschine (10), der aus einer in Fahrtrichtung zeigenden Stellung um 180° in eine nach rückwärts zeigende Stellung verstellbar, in seinen beiden Stellungen an seinen beiden Seiten von Fahrzeugaufbauten (Konsolen 14, 15) umgeben und auf einem Podest (20) mittig oder etwa mittig zwischen den Fahrzeugaufbauten angeordnet ist, dadurch gekennzeichnet, daß das Podest (20) außermittig angeordnet und das Sitzkissen (39) in eine hochgeklappte Stellung verstellbar ist.

2. Sitz nach Anspruch 1 mit einer am Podest (20) vorgesehenen Drehvorrichtung für den Sitz, dadurch gekennzeichnet, daß die Drehachse der Drehvorrichtung außermittig am Podest und mittig oder etwa mittig zwischen den Fahrzeugaufbauten (Konsolen 14, 15) vorgesehen ist, und in den beiden Stellungen Abstand zu den Anlenkstellen des Sitzkissens (39) aufweist.

3. Sitz nach Anspruch 1 oder 2 mit einem Zwischenrahmen, dadurch gekennzeichnet, daß der Zwischenrahmen einen mit der Drehvorrichtung verbundenen Horizontalteil (36) mit Seitenteilen (37, 38) aufweist, die mit Bezug auf die Drehachse der Drehvorrichtung nach rückwärts sich fort erstrecken.

4. Sitz nach einem oder mehreren der vorherigen Ansprüche, dadurch gekennzeichnet, daß das Sitzkissen (39) auf einem U-förmigen Sitzkissenrahmen mit einem horizontalen Basisteil (45) angeordnet ist, das unterhalb des Sitzkissens und oberhalb des Horizontalteils (36) angeordnet ist und in Vertikalseiten (46, 47) übergeht, die zwischen den Seitenteilen (37, 38) angeordnet und mit diesen vertikal schwenkbar verbunden sind.

5. Sitz nach einem oder mehreren der vorherigen Ansprüche mit einer Rückenlehne (43), dadurch gekennzeichnet, daß die Rückenlehne (43) mit den Seitenteilen (37, 38) verbunden ist, die über Gelenke mit den Vertikalseiten (46, 47) an Stellen angelenkt sind, die der Rückenlehne zugelegen und der Drehachse der Drehvorrichtung abgelegen sind.

6. Sitz nach einem oder mehreren der vorherigen Ansprüche, dadurch gekennzeichnet, daß das Sitzkissen (39) entgegen der Wirkung mindestens einer Feder (63) aus seiner Sitzstellung und seiner hochgeklappten Stellung verstellbar ist.

7. Sitz nach Anspruch 6, dadurch gekennzeichnet, daß die Feder (63) sich einenends an den Seitenteilen (37, 38) und anderenends an den Vertikalseiten (46, 47) abstützt und so angeordnet ist, daß beim Verschwenken des Sitzkissens (39) die vertikalseitige Anschlußstelle der Feder von einer Seite des Vertikal- und Seitenteil miteinander verbindenden Gelenks auf dessen andere Seite wandert.

8. Sitz nach Anspruch 6, dadurch gekennzeichnet, daß mindestens eine Vertikalseite (46 bzw. 47) mit einer drehbar gelagerten, eine Stange (62) aufnehmenden Stummelwelle (68) versehen ist, die Stange in einem drehbar in einem Seitenteil (37, 38) gelagerten Bolzen (64) verschiebbar und die Feder (63) auf der Stange zwischen der Stummelwelle (68) und dem Bolzen (64) vorgesehen ist.

9. Sitz nach einem oder mehreren der vorherigen Ansprüche, dadurch gekennzeichnet, daß der Sitzkissenrahmen mit einer an einer Stange (78) angeordneten Nase (80) versehen ist, die Stange (78) am Sitzkissenrahmen drehbar gelagert ist und daß die Nase in zwei Aussparungen (75, 76) einrastbar ist, die in einer mit dem Podest (20) verbundenen Platte (38) vorgesehen sind.

0123897

1/3

Fig. 1

Fig. 7

2/3

Fig. 3

Fig. 2

3

37

4

51

35

4

39

46

49

5

49

48

62

6

5

3

78

29

27

6

25

5

68

69

46

70

37

63

66

64

62

67

50

46 52

51

37

Fig. 4

38

81

80

77

75

76

Fig. 6

Fig. 5

Fig. 8

Fig. 9